(19) Europäisches Patentamt / European Patent Office / Office européen des brevets

(11) **EP 2 062 192 B1**

(12) **FASCICULE DE BREVET EUROPEEN**

(45) Date de publication et mention
de la délivrance du brevet:
**17.04.2013 Bulletin 2013/16**

(21) Numéro de dépôt: **07803426.1**

(22) Date de dépôt: **12.09.2007**

(51) Int Cl.:
*G06F 21/86* *(2013.01)*

(86) Numéro de dépôt international:
**PCT/EP2007/059562**

(87) Numéro de publication internationale:
**WO 2008/031838 (20.03.2008 Gazette 2008/12)**

(54) **SYSTEME ANTI-INTRUSION POUR LA PROTECTION DE COMPOSANTS ELECTRONIQUES**

ANTIEINDRINGSYSTEM ZUM SCHUTZ ELEKTRONISCHER KOMPONENTEN

ANTI-INTRUSION SYSTEM FOR PROTECTING ELECTRONIC COMPONENTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.09.2006 FR 0608098**

(43) Date de publication de la demande:
**27.05.2009 Bulletin 2009/22**

(73) Titulaire: **THALES**
**92200 Neuilly sur Seine (FR)**

(72) Inventeur: **ZIAEI, Afshin**
**92170 Vanves (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 126 358         WO-A-01/59544**
**WO-A-2004/030005     GB-A- 2 278 218**
**US-A1- 2002 084 090     US-A1- 2002 199 111**

- **DE LOS SANTOS H J ET AL: "RF MEMS for ubiquitous wireless connectivity: Part 1 - fabrication" IEEE MICROWAVE MAGAZINE, IEEESERVICE CENTER, PISCATAWAY, NJ, US, vol. 5, no. 4, décembre 2004 (2004-12), pages 36-49, XP011124827 ISSN: 1527-3342**

## Description

Le domaine de l'invention est celui des systèmes anti-intrusion pour la protection de composants électroniques et leur application dans le domaine des télécommunications.

Un système anti-intrusion a pour objectif de détecter toute tentative d'intrusion dans le dispositif électronique à protéger et activer un système d'alerte le cas échéant. Les systèmes anti-intrusion sont utilisés pour protéger des dispositifs électroniques dont on veut conserver la confidentialité.

Selon l'état de l'art des systèmes anti-intrusion, voir par example le document US 2002/199 111, la protection peut être assurée en utilisant une enceinte constituée d'un réseau de fils conducteurs intégré dans une résine. Une intrusion se manifestant par une perforation de l'enceinte est alors détectée par l'apparition d'une rupture au niveau des fils conducteurs. Ce type de système ne donne pas entière satisfaction pas ses performances; notamment parce qu'il ne protège pas d'une intrusion à l'aide de rayons X.

L'invention pour pallier notamment au problème d'intrusion par rayonnement X propose d'utiliser une enceinte entièrement conductrice, constituant un blindage électromagnétique et comprenant des micro-composants permettant la détection d'intrusions.

Plus précisément l'invention concerne un système anti-intrusion pour la protection de composants électroniques comportant un substrat sur lequel sont situés les composants électroniques, une enceinte conductrice encapsulant les composants électroniques à la surface du substrat, ledit système comprenant en outre un dispositif d'alerte caractérisé en ce qu'il comprend au moins : un circuit de détection d'intrusion encapsulé dans ladite enceinte, ledit circuit de détection d'intrusion comprenant au moins :

- une antenne émettrice situé à la surface du substrat et émettant un signal de puissance,
- un micro-commutateur électromécanique capacitif associé à des moyens de réception dudit signal de puissance et ledit micro-commutateur étant apte à détecter une chute de puissance de signal et activer le cas échéant un dispositif d'alerte d'intrusion,
- des moyens de réception du signal émis, lesdits moyens de réception transmettant une chute de signal lors d'une intrusion dans l'enceinte, lesdits moyens de réception étant reliés audit micro-commutateur,
  ledit micro-commutateurs électromécaniques comprend une structure comportant une membrane flexible et un ensemble comportant une couche de diélectrique, et deux lignes signal disposées coplanaires dans le prolongement l'une de l'autre et dont les extrémités forment une première couche métallique, ladite membrane étant séparée de l'ensemble par un gap diélectrique,

- l'antenne émettrice émettant un signal de puissance telle que la tension appliquée Veq entre la membrane et l'électrode est comprise entre une tension Vp d'activation et une tension Vr de relâchement, lesdites tensions d'activation et de relâchement répondant respectivement aux équations suivantes :

$$V_p = \sqrt{\frac{8kg_0^3}{27\varepsilon_0 wW}}$$

où w est la largeur des lignes signal, W la largeur de la membrane, $g_0$ est l'épaisseur du gap diélectrique sans tension appliquée sur la membrane, $\varepsilon_0$ : la permittivité du vide et k le coefficient de raideur de la membrane.

$$V_r = \sqrt{\frac{2k(g_0 - t_d)t_d^2}{\varepsilon'\varepsilon_0 A\varepsilon_r^2}}$$

où $t_d$ est l'épaisseur de diélectrique séparant la couche métallique de la membrane, $\varepsilon_r$ la permittivité relative du diélectrique, A est égal au produit wW et $\varepsilon'$ est une constante permettant de prendre en compte l'effet de la présence du gap diélectrique qui modifie la permittivité des électrodes.

Selon une première variante de l'invention, les moyens de réception comprennent : une antenne réceptrice située à la surface du substrat et reliée au micro-commutateur électromécanique capacitif.

Selon une deuxième variante de l'invention, les moyens de réception comprennent : un élément conducteur relié à l'enceinte enceinte conductrice et au micro-commutateur électromécanique capacitif.

Selon une troisième variante de l'invention, les moyens de réception comprennent :

- une antenne réceptrice située à la surface du substrat et reliée à un premier micro-commutateur électromécanique 15 capacitif,
- un élément conducteur relié à l'enceinte conductrice et à un deuxième micro-commutateur électromécanique capacitif.

Selon une variante de l'invention, au moins un des micro-commutateurs électromécaniques capacitifs est de type série.

Avantageusement, les antennes émettrices et réceptrices sont de type bidirectionnel.

L'invention sera mieux comprise et d'autres avantages apparaîtront à la lecture de la description qui va suivre, donnée à titre non limitatif et grâce aux figures annexées parmi lesquelles :

- La figure 1 illustre une première variante de système anti-intrusion selon l'invention comprenant au moins une antenne réceptrice reliée à un micro-commutateur électromécanique capacitif, vue en coupe ;
- La figure 2 illustre la première variante de système anti-intrusion selon l'invention vue de dessus à l'intérieur de l'enceinte ;
- La figure 3 illustre un micro-commutateur électromécanique capacitif de type série vu de dessus;
- La figure 4 illustre le micro-commutateur électromécanique capacitif de type série vu en coupe ;
- La figure 5 illustre l'évolution de l'épaisseur du gap diélectrique en fonction de la tension appliquée sur le micro-commutateur électromécanique capacitif de type série lors de son actionnement.
- La figure 6 illustre une deuxième variante de système anti-intrusion selon l'invention dont un micro-commutateur électromécanique est relié à l'enceinte conductrice par un élément conducteur, vue en coupe ;
- La figure 7 illustre une partie de la deuxième variante de système anti-intrusion selon l'invention, vue de dessus à l'intérieur de l'enceinte ;

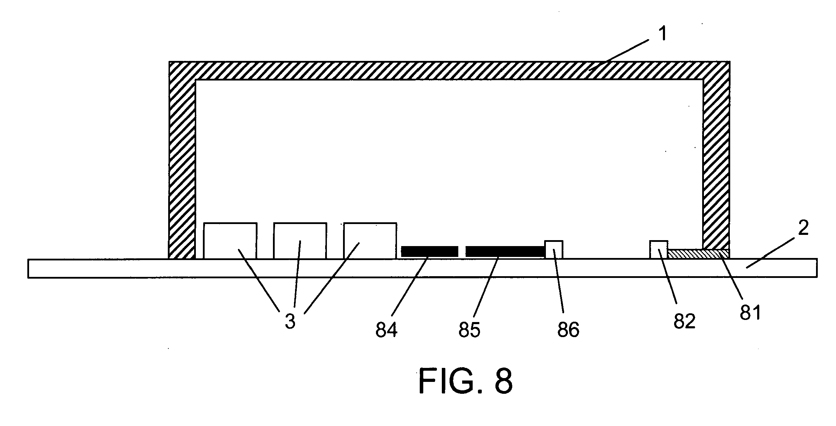

- La figure 8 illustre une troisième variante de système anti-intrusion selon l'invention, comprenant au moins une antenne réceptrice reliée à un premier micro-commutateur électromécanique capacitif et un second micro-commutateur électromécanique capacitif relié à l'enceinte conductrice par un élément conducteur, vue en coupe ;

Le système anti-intrusion pour la protection de composants électroniques 3 selon l'invention comporte un substrat 2 sur lequel sont situés les composants électroniques, une enceinte conductrice 1 encapsulant les composants électroniques à la surface du substrat 2. Le circuit de détection d'intrusion est encapsulé dans ladite enceinte 1. Il comprend au moins :

une antenne émettrice 4 situé à la surface du substrat 2 et émettant un signal,
un micro-commutateur électromécanique capacitif, ledit micro-commutateur étant relié au dispositif d'alerte par une ligne signal, de manière à pouvoir l'activer, ledit micro-commutateur étant apte à détecter une chute de puissance de signal, et
des moyens de réception du signal émis, lesdits moyens de réception transmettant une chute de signal lors d'une intrusion dans l'enceinte, lesdits moyens de réception étant reliés audit micro-commutateur.

Toute effraction ou atteinte à l'intégrité physique de l'enceinte conductrice 1 entraîne une perturbation de la transmission du signal de l'antenne émettrice 4 aux moyens de réception, diminuant ainsi la puissance du signal transmis et provoquant un changement d'état du micro-commutateur.

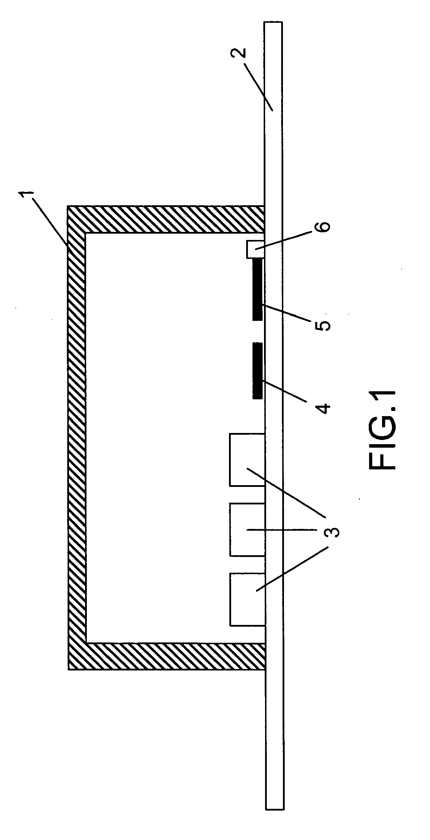

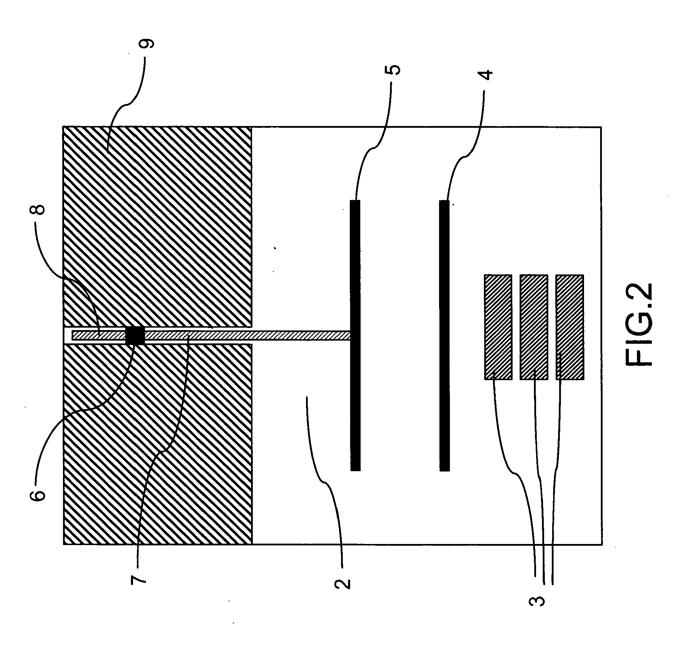

Une première variante d'un système anti-intrusion pour la protection de composants électroniques selon l'invention utilisant un micro-commutateur électromécanique capacitif de type série est illustrée sur les figures 1 et 2.

La première variante du système selon l'invention comprend une enceinte hermétique et conductrice 1 à la surface d'un substrat 2, une antenne émettrice 4, une antenne réceptrice 5 reliée au système d'alerte, non représenté, par deux lignes de transmission 7 et 8 au-dessus desquelles se trouve un micro-commutateur électromécanique capacitif de type série 6.

Le système anti-intrusion fonctionne de la façon suivante. Le système utilise les variations d'un signal de référence, générées par une violation de l'enceinte hermétique et conductrice 1, pour déclencher le dispositif d'alerte. En pratique, on arme le système en actionnant le micro-commutateur électromécanique capacitif de type série 6 en le mettant à l'état bas, l'état passant. On envoie ensuite un signal à travers l'antenne émettrice 4, qui est réceptionné par l'antenne réceptrice 5 puis transmis au dispositif d'alerte via les lignes de transmission 7 et 8. Le dispositif d'alerte est configuré pour se déclencher lorsqu'il ne reçoit plus de signal. Par ailleurs, la puissance de ce signal est déterminée de manière à maintenir le micro-commutateur électromécanique capacitif de type série 6 à l'état bas (passant) suivant le principe qui sera expliqué dans le prochain paragraphe et que l'on nomme l'auto-maintien. Toute effraction ou atteinte à l'intégrité physique de l'enceinte conductrice 1 entraîne une perturbation de la transmission du signal de l'antenne émettrice 4 à l'antenne réceptrice 5, diminuant ainsi la puissance du signal transmis. Cette baisse de puissance du signal traversant le micro-commutateur électromécanique capacitif de type série 6 provoque son passage à l'état haut (non passant). Le dispositif d'alerte connecté en sortie du micro-commutateur électromécanique capacitif de type série 6 ne reçoit plus de signal et se déclenche.

On va décrire plus en détails une structure de micro-commutateur de type série comprenant :

- Une membrane flexible,
- Une couche de diélectrique,
- Une couche métallique.

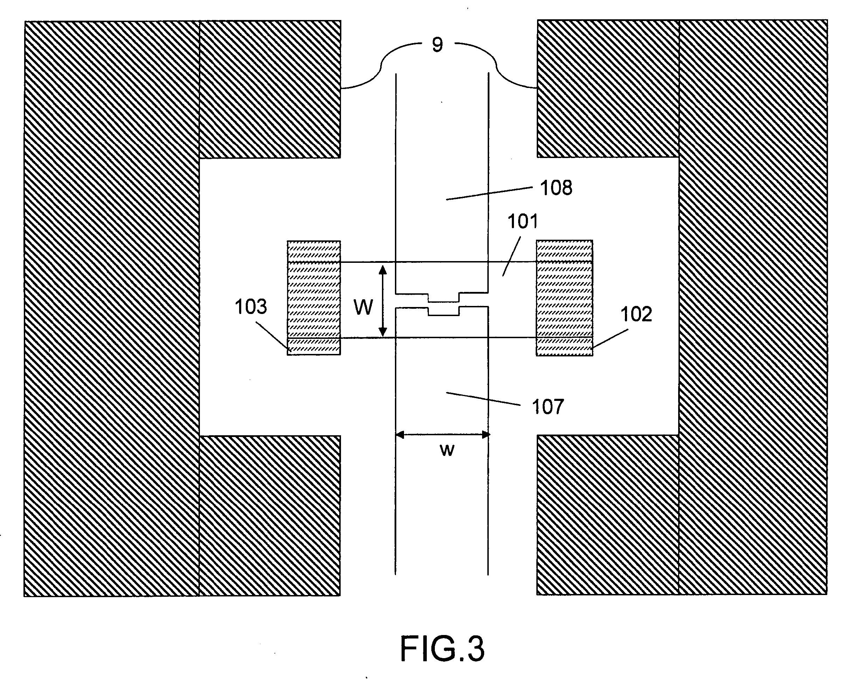

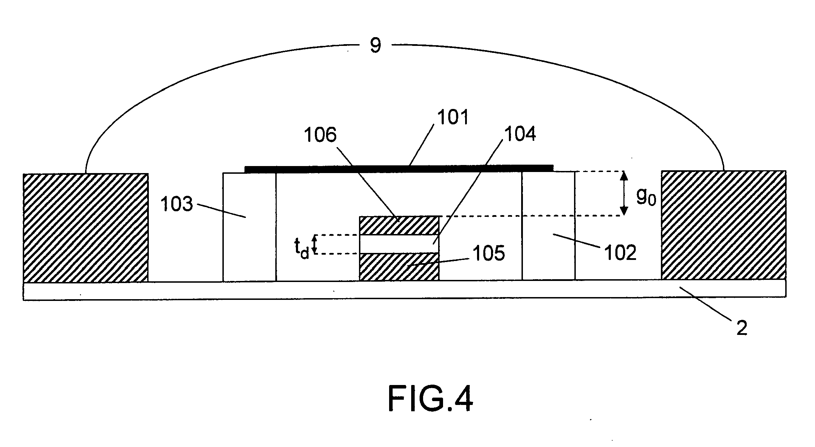

La figure 3 représente une vue de dessus d'un tel micro-commutateur et la figure 4 représente une vue en coupe.

La structure du premier micro-commutateur en série comprend : une première ligne signal 107 (reliée à la ligne signal 7) et une deuxième ligne signal 108 (reliée à la ligne signal 8) disposées coplanaires dans le prolongement l'une de l'autre, séparées par une zone de commutation, dont les extrémités forment une couche métallique 105 qui joue le rôle d'électrode inférieure, disposée sur le substrat 2, un matériau diélectrique 104 placé sur la couche métallique 105. Une membrane 101 surplombe les lignes signal en reliant les piliers 102 et 103 posés sur le substrat. La membrane est isolée du plan de masse 9.

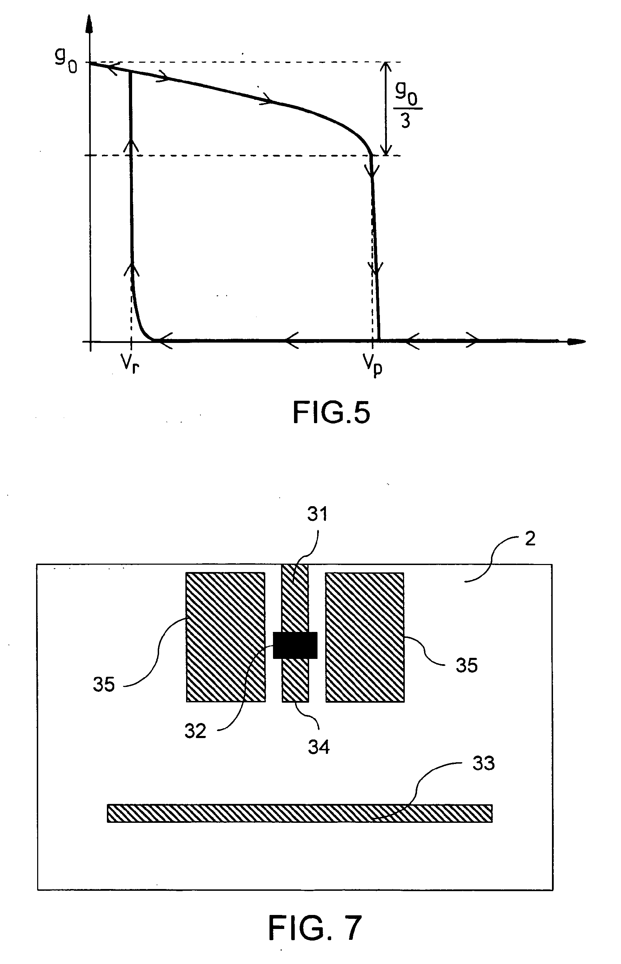

Le fonctionnement du micro-commutateur est comme suit : l'application d'une tension d'activation sous la membrane 101 le fait passer d'un état de repos ouvert, non passant, à l'état fermé, passant. Le micro-commutateur dispose de moyens spécifiques (non décrits) pour imposer une différence de potentiel entre la couche métallique 105 et la membrane 101. Sous l'effet de la tension d'activation, la membrane se déforme jusqu'à toucher le diélectrique 104. Les deux lignes signal 107 et 108 sont alors reliées entre elles par effet capacitif. La figure 5 illustre l'évolution de l'épaisseur du gap diélectrique en fonction de la tension appliquée sur le micro-commutateur électromécanique capacitif de type série lors de son actionnement, go est l'épaisseur initiale du gap diélectrique entre la membrane 101 et le diélectrique 104.

Le micro-commutateur série est caractérisé par deux tensions : Vp, la tension d'activation et Vr la tension de relâchement. Vp est déterminée par l'équation suivante :

$$V_p = \sqrt{\frac{8kg_0^3}{27\varepsilon_0 wW}}$$

où w est la largeur des lignes signal, W la largeur de la membrane (le produit wW représente alors la surface en regard des lignes signal et de la membrane), $g_0$ est l'épaisseur du gap diélectrique sans tension appliquée, $\varepsilon_0$ : la permittivité du vide et k le coefficient de raideur de la membrane.

Vr est déterminée par l'équation suivante :

$$V_r = \sqrt{\frac{2k(g_0 - t_d)t_d^2}{\varepsilon'\varepsilon_0 A\varepsilon_r^2}}$$

où $t_d$ est l'épaisseur de diélectrique séparant la ligne de la membrane et $\varepsilon_r$ la permittivité relative du diélectrique, A est égal au produit wW et $\varepsilon'$ est une constante permettant de prendre en compte l'effet de la présence du gap diélectrique qui modifie la permittivité des électrodes.

Le $\varepsilon'$ coefficient est compris entre 0.4 et 0.8. Il peut être déterminé, de façon empirique, en comparant les résultats de mesures avec le calcul théorique d'une capacité plane.

Notons P la puissance du signal traversant le micro-commutateur série et Veq la tension moyenne correspondant à cette puissance. On a alors la relation suivante :

$$P = \frac{V_{eq}^2}{R}$$

où R est l'impédance de la ligne signal. Le micro-commutateur série peut être dans trois états possibles :

- Veq > Vp : on se trouve dans le cas de l'auto-actionnement. Cela signifie que le simple fait de faire passer le signal à travers le micro-commutateur provoque son passage à l'état bas, l'état passant.
- Vr < Veq < Vp : on se trouve dans le cas de l'auto-maintien. Cela signifie que le simple fait de faire passer le signal à travers le micro-commutateur empêche la membrane de remonter après actionnement.
- Veq < Vr, le micro-commutateur fonctionne de manière simple, le signal ne perturbe pas le fonctionnement du micro-commutateur qui est à l'état haut, non passant.

Pour le système anti-intrusion selon l'invention, la puissance du signal est dimensionnée de telle sorte que l'on se place à la limite du deuxième et du troisième cas. Le micro-commutateur peut alors passer de l'auto-maintien à l'état haut en cas de légère diminution de la puissance du signal.

Avantageusement, au moins un des micro-commutateurs électromécaniques comprend une seconde couche de métal 106 située sur le diélectrique 104. L'intérêt de la seconde couche métallique 106 est de pallier le problème de décharge électrique qui finit par s'opérer au cours du temps au niveau de la couche diélectrique 104, représentant une dégradation au niveau de la détection des variations de la puissance du signal.

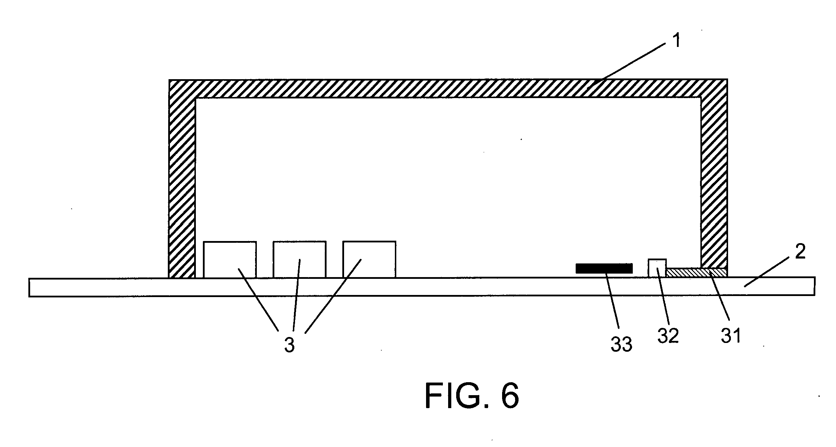

Nous allons décrire ci-après, une seconde variante de système anti-intrusion selon l'invention, illustrée grâce notamment aux figures 6 et 7, où un micro-commutateur électromécanique 32 est relié à l'enceinte conductrice 1 par un premier élément conducteur 31. D'autre part, le micro-commutateur électromécanique 32 est relié au dispositif d'alerte par un second élément conducteur 34.

La seconde variante de système anti-intrusion fonctionne de la façon suivante. Le système utilise les perturbations des courants de Foucault générés par l'antenne 33 sur l'enceinte. Une violation de l'enceinte se traduit par une variation de ces courants de Foucault. Comme dans la première variante de système anti-intrusion, c'est cette variation qui va être utilisée pour changer l'état du micro-commutateur électromécanique 32. La baisse de la puissance du signal traversant le signal, le fait passer d'un état bas (passant) à un état haut (non passant) ce qui a pour effet d'activer le dispositif d'alerte configuré pour se déclencher lorsqu'il ne reçoit plus de signal.

Nous allons décrire ci-après, une troisième variante de système anti-intrusion selon l'invention utilisant en parallèle les deux variantes précédentes. La troisième variante de système anti-intrusion selon l'invention comprend une enceinte hermétique et conductrice 1 posée sur un substrat 2 ; un premier ensemble de détection constitué d'une antenne émettrice 84, une antenne réceptrice 85 reliée au système d'alerte, non représenté, par une ligne de transmission, non représentée, au-dessus de laquelle se trouve un premier micro-commutateur électromécanique capacitif de type série 86, et d'un second ensemble de détection constitué d'un second micro-commutateur électromécanique capacitif de type série 82 relié à l'enceinte hermétique et conductrice 1 par un premier élément conducteur 81 et relié au dispositif d'alerte par un second élément conducteur, non représenté.

La troisième variante de système anti-intrusion fonctionne de la façon suivante. Les deux ensembles de détections fonctionnent en parallèle. Le premier ensemble de détection correspond à la première variante de système de détection. Le second ensemble de détection correspond à la deuxième variante de système de détection. Les deux ensembles de détections peuvent utiliser la même antenne émettrice 84.

Avantageusement, au moins un des éléments conducteurs est situé à la surface du substrat 2.

Avantageusement, les antennes émettrices et réceptrices sont de type bidirectionnel.

Selon un exemple de réalisation de micro-commutateur électromécanique pour un système de protection selon l'invention, la membrane 101 a une épaisseur de 0,7 μm constituée de deux couches métalliques : une première couche en aluminium de 0,5 μm et une seconde couche en alliage titane tungstène de 0,2 μm. La membrane 101 présente une largeur d'environ 100 μm et une longueur dépendante de la ligne coplanaire.

Une ligne coplanaire est un conducteur de signal hyperfréquence constitué d'un substrat (généralement du silicium étant donné sont faible coût et le peu d'influence que peut avoir la qualité du substrat sur les performances d'une ligne coplanaire) sur lequel se trouve une ligne de conducteur métallique (généralement de l'or) et de deux plans de masse situés de part et d'autre de cette ligne (généralement en or aussi). On définit une ligne coplanaire par : l'épaisseur de la ligne et des plans de masse, la largeur de la ligne centrale et la distance séparant la ligne centrale des plans de masse. On obtient ainsi une structure symétrique par rapport à la ligne centrale.

Les lignes coplanaires 107 et 108 qui servent de support au micro-commutateur électromécanique capacitif ont une épaisseur de 3 μm, elles sont affinées sous la membrane à une épaisseur de 0,7 μm. elles sont recouvertes à cet endroit d'un diélectrique d'une épaisseur variant entre 0,2 et 0,4 μm.

Les piliers 102 et 103, d'une hauteur de 3 μm, sont disposés de part et d'autre des lignes signal 107 et 108 pour servir de support à la membrane 101 et sont indépendants de la masse 9 qui se retrouve creusée afin de pouvoir disposer les piliers 102 et 103 au même niveau que ladite masse. L'espace séparant les lignes signal 107 et 108 est de 10 μm.

**Revendications**

1. Système anti-intrusion pour la protection de composants électroniques (3) comportant un substrat (2) sur lequel sont situés les composants électroniques, une enceinte conductrice (1) encapsulant les composants électroniques à la surface du substrat (2), ledit système comprenant en outre un dispositif d'alerte **caractérisé en ce qu'**il comprend un circuit de détection d'intrusion encapsulé dans ladite enceinte (1), ledit circuit de détection d'intrusion comprenant au moins :

   - une antenne émettrice (4) situé à la surface du substrat (2) et émettant un signal de puissance,
   - un micro-commutateur électromécanique capacitif associé à des moyens de réception dudit signal de puissance et ledit micro-commutateur étant apte à détecter une chute de puissance de signal et activer le cas échéant un dispositif d'alerte d'intrusion,
   - des moyens de réception du signal émis, lesdits moyens de réception transmettant une chute de signal lors d'une intrusion dans l'enceinte, lesdits moyens de réception étant reliés audit micro-commutateur,
   ledit micro-commutateur comprenant une structure comportant une membrane flexible (101) et un ensemble comportant une couche de diélectrique (104), et deux lignes signal (107) et (108) disposées coplanaires dans le prolongement l'une de l'autre et dont les extrémités forment une première couche métallique (105), ladite membrane étant séparée de l'ensemble par un gap diélectrique,
   - L'antenne émettrice émettant un signal de puissance telle que, pour le micro-commutateur, la tension appliquée Veq entre la membrane (101) et la couche métallique (105) est comprise entre une tension Vp d'activation et une tension Vr de relâchement, lesdites tensions d'activation et de relâchement répondant respectivement aux équations suivantes :

$$V_p = \sqrt{\frac{8kg_0^3}{27\varepsilon_0 wW}}$$

où w est la largeur des lignes signal, W la largeur

de la membrane, $g_o$ est l'épaisseur du gap diélectrique sans tension appliquée, $\varepsilon_o$ la permittivité du vide et k le coefficient de raideur de la membrane.

$$V_r = \sqrt{\frac{2k(g_0 - t_d)t_d^2}{\varepsilon'\varepsilon_0 A \varepsilon_r^2}}$$

où $t_d$ est l'épaisseur de diélectrique séparant la métallique de la membrane, $\varepsilon_r$ la permittivité relative du diélectrique et $\varepsilon'$ une constante permettant de prendre en compte l'effet de la présence du gap diélectrique qui modifie la permittivité des électrodes et A est égal au produit wW.

2. Système anti-intrusion selon la revendication 1, **caractérisé en ce que** laditeantenne réceptrice (5) est située à la surface du substrat (2)

3. Système anti-intrusion selon la revendication 1, **caractérisé en ce que** les moyens de réception comprennent: un élément conducteur (31) relié à l'enceinte enceinte conductrice (1) et au micro-commutateur électromécanique capacitif.

4. Système anti-intrusion selon la revendication 1, **caractérisé en ce que** les moyens de réception comprennent:

- une antenne réceptrice (85) située à la surface du substrat (2) et reliée à un premier micro-commutateur électromécanique capacitif (86),
- un élément conducteur (81) relié à l'enceinte conductrice (1) et à un deuxième micro-commutateur électromécanique capacitif (82).

5. Système anti-intrusion selon l'une des revendications précédentes, **caractérisé en ce qu'**au moins un des micro-commutateurs électromécaniques capacitifs est de type série.

6. Système anti-intrusion selon l'une des revendications 3 à 5, **caractérisé en ce qu'**au moins un des éléments conducteur est posé à la surface du substrat (2).

7. Système anti-intrusion selon l'une des revendications précédentes, **caractérisé en ce qu'**au moins un des micro-commutateurs électromécaniques comprend une seconde couche de métal (106) située sur le diélectrique (104).

8. Système anti-intrusion selon l'une des revendications précédentes, **caractérisé en ce que** l'enceinte conductrice (1) est formée de métal.

9. Système anti-intrusion selon l'une des revendications précédentes, **caractérisé en ce que** les antennes émettrices et réceptrices sont de type bidirectionnel.

## Claims

1. An anti-intrusion system for protecting electronic components (3), comprising a substrate (2) on which said electronic components are located, a conducting enclosure (1) encapsulating said electronic components on the surface of said substrate (2), said system further comprising an alarm device, **characterised in that** it comprises an intrusion detection circuit encapsulated in said enclosure (1), said intrusion detection circuit at least comprising:

- a transmission antenna (4) that is located on the surface of said substrate (2) and transmitting a power signal;
- a capacitive electromechanical micro-switch that is associated with means for receiving said power signal, and said micro-switch being designed to detect a drop in signal power and activate an intrusion alarm device if necessary;
- means for receiving said transmitted signal, said reception means transmitting a signal drop in the event of an intrusion into said enclosure, said receiving means being linked to said micro-switch;

said micro-switch comprising a structure that comprises a flexible membrane (101) and an assembly that comprises a dielectric layer (104), and two signal lines (107) and (108) which are arranged to be coplanar with each other in the extension and the ends of which form a first metal layer (105), said membrane being separated from said assembly by a dielectric gap;

- said transmission antenna transmitting a power signal so that, for said micro-switch, the voltage Veq applied between said membrane (101) and said metal layer (105) is between an activation voltage Vp and a release voltage Vr, said activation and release voltages respectively complying with the following equations:

$$V_p = \sqrt{\frac{8kg_0^3}{27\varepsilon_0 wW}}$$

where w is the width of the signal lines, W is the width of the membrane, $g_o$ is the thickness of the dielectric gap without voltage applied, $\varepsilon_o$ is

the permittivity of the vacuum and k is the rigidity coefficient of the membrane;

$$V_r = \sqrt{\frac{2k(g_0 - t_d)^2 t_d^2}{\varepsilon' \varepsilon_0 A \varepsilon_r^2}}$$

where $t_d$ is the dielectric thickness separating the metal from the membrane, $\varepsilon_r$ is the relative permittivity of the dielectric and $\varepsilon'$ is a constant that allows the effects of the presence of the dielectric gap that modifies the permittivity of the electrodes to be taken into account and A is equal to the product wW.

2. The anti-intrusion system according to claim 1, **characterised in that** said reception antenna (5) is located on the surface of said substrate (2).

3. The anti-intrusion system according to claim 1, **characterised in that** said reception means comprise: a conducting element (31) that is linked to said conducting enclosure (1) and to said capacitive electromechanical micro-switch.

4. The anti-intrusion system according to claim 1, **characterised in that** said reception means comprise:

   - a reception antenna (85) that is located on the surface of said substrate (2) and that is linked to a first capacitive electromechanical micro-switch (86);
   - a conducting element (81) that is linked to said conducting enclosure (1) and to a second capacitive electromechanical micro-switch (82).

5. The anti-intrusion system according to any one of the preceding claims, **characterised in that** at least one of said capacitive electromechanical micro-switches is of the series type.

6. The anti-intrusion system according to any one of claims 3 to 5, **characterised in that** at least one of said conducting elements is placed on the surface of said substrate (2).

7. The anti-intrusion system according to any one of the preceding claims, **characterised in that** at least one of said electromechanical micro-switches comprises a second metal layer (106) that is located on said dielectric (104).

8. The anti-intrusion system according to any one of the preceding claims, **characterised in that** said conducting enclosure (1) is made of metal.

9. The anti-intrusion system according to any one of the preceding claims, **characterised in that** said transmission and reception antennae are of the bidirectional type.

**Patentansprüche**

1. Antieindringsystem zum Schützen elektronischer Komponenten (3), umfassend ein Substrat (2), auf dem sich die elektronischen Komponenten befinden, ein leitendes Gehäuse (1), das die elektronischen Komponenten auf der Oberfläche des Substrats (2) einkapselt, wobei das System ferner eine Alarmvorrichtung umfasst, **dadurch gekennzeichnet, dass** es eine in dem Gehäuse (1) eingekapselte Eindringerkennungsschaltung umfasst, wobei die Eindringerkennungsschaltung wenigstens Folgendes umfasst:

   - eine Sendeantenne (4), die sich auf der Oberfläche des Substrats (2) befindet und ein Leistungssignal sendet;
   - einen kapazitiven elektromechanischen Mikroschalter, der mit Mitteln zum Empfangen des Leistungssignals assoziiert ist, wobei der Mikroschalter so ausgelegt ist, dass er einen Abfall der Signalleistung erkennt und ggf. eine Eindringalarmvorrichtung aktiviert;
   - Mittel zum Empfangen des gesendeten Signals, wobei das Empfangsmittel einen Signalabfall bei einem Eindringen in das Gehäuse sendet, wobei das Empfangsmittel mit dem Mikroschalter verbunden ist;

   wobei der Mikroschalter eine Struktur mit einer flexiblen Membran (101) und einer eine dielektrische Schicht (104) aufweisenden Baugruppe und zwei Signalleitungen (107) und (108) aufweist, die koplanar zueinander in der Verlängerung angeordnet sind und deren Enden eine erste Metallschicht (105) bilden, wobei die Membran durch eine dielektrische Lücke von der Baugruppe getrennt ist;

   - wobei die Sendeantenne ein Leistungssignal sendet, so dass die zwischen der Membran (101) und der Metallschicht (105) anliegende Spannung Veq für den Mikroschalter zwischen einer Aktivierungsspannung Vp und einer Abfallspannung Vr liegt, wobei die Aktivierungs- und die Abfallspannung jeweils den folgenden Gleichungen entsprechen:

$$V_p = \sqrt{\frac{8kg_0^3}{27\varepsilon_0 wW}}$$

wobei w die Breite der Signalleitungen ist, W die Breite der Membran ist, $g_o$ die Dicke der dielektrischen Lücke ohne anliegende Spannung ist, $\varepsilon_o$ die Permittivität des Vakuums ist und k der Steifigkeitskoeffizient der Membran ist;

$$V_r = \sqrt{\frac{2k(g_0 - t_d)t_d^2}{\varepsilon' \varepsilon_0 A \varepsilon_r^2}}$$

wobei $t_d$ die dielektrische Dicke ist, die das Metall von der Membran trennt, $\varepsilon_r$ die relative Permittivität des Dielektrikums ist und $\varepsilon'$ eine Konstante ist, die es zulässt, den Effekt der Anwesenheit der dielektrischen Lücke zu berücksichtigen, die die Permittivität der Elektroden modifiziert, und A gleich dem Produkt wW ist.

2. Antieindringsystem nach Anspruch 1, **dadurch gekennzeichnet, dass** sich die Empfangsantenne (5) auf der Oberfläche des Substrats (2) befindet.

3. Antieindringsystem nach Anspruch 1, **dadurch gekennzeichnet, dass** die Empfangsmittel Folgendes umfassen: ein leitendes Element (31), das mit dem leitenden Gehäuse (1) und dem kapazitiven elektromechanischen Mikroschalter verbunden ist.

4. Antieindringsystem nach Anspruch 1, **dadurch gekennzeichnet, dass** das Empfangsmittel Folgendes umfasst:

    - eine Empfangsantenne (85), die sich auf der Oberfläche des Substrats (2) befindet und mit einem ersten kapazitiven elektromechanischen Mikroschalter (86) verbunden ist;
    - ein leitendes Element (81), das mit dem leitenden Gehäuse (1) und mit einem zweiten kapazitiven elektromechanischen Mikroschalter (82) verbunden ist.

5. Antieindringsystem nach einem der vorherigen Ansprüche, **dadurch gekennzeichnet, dass** wenigstens einer der kapazitiven elektromechanischen Mikroschalter vom seriellen Typ ist.

6. Antieindringsystem nach einem der Ansprüche 3 bis 5, **dadurch gekennzeichnet, dass** wenigstens eines der leitenden Elemente auf der Oberfläche des Substrats (2) platziert ist.

7. Antieindringsystem nach einem der vorherigen Ansprüche, **dadurch gekennzeichnet, dass** wenigstens einer der elektromechanischen Mikroschalter eine zweite Metallschicht (106) umfasst, die sich auf dem Dielektrikum (104) befindet.

8. Antieindringsystem nach einem der vorherigen Ansprüche, **dadurch gekennzeichnet, dass** das leitende Gehäuse (1) aus Metall besteht.

9. Antieindringsystem nach einem der vorherigen Ansprüche, **dadurch gekennzeichnet, dass** die Sende- und Empfangsantenne vom bidirektionalen Typ sind.

FIG.1

EP 2 062 192 B1

FIG.2

FIG.3

FIG.4

9

101

104

106

105

102

103

$g_0$

$t_d$

2

FIG.5

FIG. 7

FIG. 6

FIG. 8

**EP 2 062 192 B1**

## RÉFÉRENCES CITÉES DANS LA DESCRIPTION

**Documents brevets cités dans la description**

- US 2002199111 A